# EUROPÄISCHE PATENTSCHRIFT

(11) **EP 3 980 292 B1**
(45) Veröffentlichungstag und Bekanntmachung des Hinweises auf die Patenterteilung: **30.10.2024**
(21) Anmeldenummer: 20730419.7
(22) Anmeldetag: 03.06.2020
(51) Int. Cl.: B60L 50/12, B60L 53/14

(54) **FAHRZEUGBORDNETZ MIT EINEM GLEICHSPANNUNGSLADEANSCHLUSS**
VEHICLE ON-BOARD ELECTRICAL SYSTEM HAVING A DC VOLTAGE CHARGING CONNECTION
RÉSEAU DE BORD DE VÉHICULE COMPORTANT UNE BORNE DE CHARGE DE COURANT CONTINU

(30) Priorität: 04.06.2019 DE 102019208118
(43) Veröffentlichungstag der Anmeldung: 13.04.2022
(73) Patentinhaber: Vitesco Technologies GmbH, 93055 Regensburg (DE)
(72) Erfinder: GÖTZENBERGER, Martin, 81737 München (DE); WEINZIERL, Reinhard, 81737 München (DE); PFEILSCHIFTER, Franz, 81737 München (DE)
(74) Vertreter: Vitesco Technologies
(86) Internationale Anmeldenummer: PCT/EP2020/065313
(87) Internationale Veröffentlichungsnummer: WO 2020/245170

(56) Entgegenhaltungen:
- WO-A1-2013/160031
- DE-U1- 202018 001 504

## Beschreibung

Es ist bekannt, Fahrzeuge mit einem elektrischen Antrieb auszustatten, der von einem fahrzeugseitigen Akkumulator versorgt wird. Zur Aufladung des Akkumulators ist das Fahrzeug mit einem Ladeanschluss ausgestattet. Das Bordnetz des Fahrzeugs weist einen Hochvoltzweig auf, da zur Erreichung von hohen Leistungen der elektrische Antrieb und somit auch der Akkumulator vorzugsweise eine hohe Betriebsspannung aufweist. Beispielsweise werden Akkumulatoren mit einer Nennspannung von 400 V verwendet, wobei diese Akkumulatoren als Hochvolt-Akkumulatoren bezeichnet werden.

Weiterhin bestehen Filterkapazitäten (auch Cy-Kondensatoren genannt) zwischen den Hochvoltpotentialen der Akkumulatoren einerseits und dem Massepotential andererseits. Diese dienen zur Ableitung von Störungen, die etwa von geschalteten Komponenten erzeugt werden. Bei der Betrachtung der Gefahr eines elektrischen Schlags sind diese Filterkapazitäten zu berücksichtigen. In der Druckschrift DE 10 2015 006 208 A1 ist beschrieben, dass Akkumulatoren geteilt sein können und Teile des Akkumulators seriell betrieben werden können, wobei sich dann bei einer Nennspannung von 400 V jedes Teils des Akkumulators sich Spannungen von 800 V an den Filterkapazitäten ergeben können. Die Druckschrift DE 20 2018 001 504 U1 zeigt eine Schaltung, in der eine Ladeeinheit trennbar mit einem Punkt verbunden ist, mit dem auch ein Akkumulator und ein Antrieb gleichermaßen verbunden sind. Die Druckschrift WO 2013/160031 A1 zeigt eine Schaltung mit mehreren, über einen überbrückbaren DCDC-Wandler verbundene Akkulatoren.

Es besteht eine Aufgabe darin, eine Möglichkeit aufzuzeigen, mit der sich auf einfache Weise Fahrzeugkomponenten mit hoher Spannung betreiben lassen, ohne dass zu hohe Filterkapazitäten bei fehlerhafter Isolation zu einem gefährlichen elektrischen Schlag führen können.

Diese Aufgabe wird gelöst durch den Gegenstand des Anspruchs 1. Weitere Merkmale, Ausführungsformen, Eigenschaften und Vorteile ergeben sich mit den Unteransprüchen, der Beschreibung und den Figuren.

Es wird ein Fahrzeugbordnetz vorgeschlagen, das einen Gleichspannungsladeanschluss, einen nicht konfigurierbaren Akkumulator, einen galvanisch trennenden Gleichspannungswandler und einen elektrischen Antrieb aufweist. Der nicht konfigurierbare Akkumulator weist Zellen auf, die schalterlos miteinander (in Reihe) verbunden sind. Somit ergibt sich eine konstante Nennspannung und somit auch mangels Schalter keine Möglichkeit, durch eine konfigurierbare Anordnung der Zellen unterschiedliche Nennspannungen (Konfigurationen) des Akkumulators einzustellen. Andererseits sind keine zusätzlichen Schalter zur Akkumulatorkonfiguration erforderlich. Der galvanisch trennende Gleichspannungswandler ermöglicht hierbei die Potentialtrennung des Gleichspannungsladeanschlusses gegenüber zahlreicher Cy-Kapazitäten. Es ergibt sich somit für den Gleichspannungsladeanschluss nur eine geringe Cy-Kapazität (d. h. eine geringe Kapazität zwischen den Spannungspotentialen des Akkumulators einerseits und dem Massepotential andererseits).

Es ist vorgesehen, dass der Gleichspannungsanschluss über einen ersten Schalter mit dem Gleichspannungswandler verbunden ist, und dass der Akkumulator über einen zweiten Schalter mit dem Gleichspannungswandler verbunden ist. Insbesondere sind Gleichspannungsladeanschluss und Akkumulator über jeweilige Schalter mit derselben Seite des Gleichspannungswandlers verbunden. Jeder der beiden Schalter weist eine erste Seite auf, die direkt mit dem Gleichspannungswandler verbunden ist. Die zweite Seite des ersten Schalters ist mit dem Gleichspannungsladeanschluss verbunden und die zweite Seite des zweiten Schalters ist mit dem Akkumulator verbunden. Die beiden Schalter weisen somit eine erste Seite auf, an der diese miteinander verbunden ist (und auch mit dem Gleichspannungswandler), und weisen eine zweite Seite auf, die nur mit dem Gleichspannungsladeanschluss bzw. nur mit dem Akkumulator verbunden ist. Der Schalter zwischen dem Akkumulator und dem Gleichspannungswandler wird auch als Direktverbindungsschalter bezeichnet. Der Schalter zwischen dem Gleichspannungsladeanschluss und dem Gleichspannungswandler kann als Ladeanschlussschalter bezeichnet werden oder kann auch dem im Weiteren beschriebenen Trennschalter entsprechen. Mit einer direkten Verbindung zwischen den Schaltern und den Gleichspannungswandler werden schalterfreie Verbindungen bezeichnet, die wandlerfrei sind oder die einen weiteren Wandler aufweisen. Von dem Gleichspannungswandler aus gesehen kann sich somit eine Gabelung in zwei Pfade ergeben, wobei der erste Pfad über den ersten Wandler zum Gleichspannungsladeanschluss führt und der zweite Pfad über den zweiten Schalter zum Akkumulator führt. Die hier beschriebenen Schalter sind vorzugsweise zweipolig und trennen beide Versorgungspotentiale ab, wenn sie offen sind.

Es ist eine schaltbare Verbindungsschaltung vorgesehen, die mit der ersten Seite des Gleichspannungswandlers verbunden ist. An diese Verbindungsschaltung ist ein Gleichspannungsladeanschluss angeschlossen. Diese schaltbare Verbindungsschaltung umfasst ferner einen Ladeanschlussschalter. Der Akkumulator ist über einen Antriebsschalter (vorzugsweise nicht Teil der Verbindungsschaltung) mit dem elektrischen Antrieb sowie einer zweiten Seite des Gleichspannungswandlers verbunden. Insbesondere führt ein erster Pfad des Antriebsschalters zu dem elektrischen Antrieb und ein zweiter Pfad zur zweiten Seite des Gleichspannungswandlers. Von dem Antriebsschalter aus gesehen ergibt sich somit eine Gabelung in zwei Pfade, wobei ein erster Pfad zum elektrischen Antrieb führt und ein zweiter Pfad zur zweiten Seite des Gleichspannungswandlers.

Die Verbindungsschaltung weist einen Direktverbindungsschalter auf, welcher den Akkumulator mit der ersten Seite des Gleichspannungswandlers schaltbar verbindet. Der Gleichspannungsladeanschluss ist über einen Ladeanschlussschalter der Verbindungsschaltung mit dem Direktverbindungsschalter verbunden. Es ergibt sich somit ein erster Verbindungspunkt, der schalterlos mit dem galvanisch trennenden Gleichspannungswandler verbunden ist. Von diesem ersten Verbindungspunkt aus ergibt sich eine Verzweigung über den Direktverbindungsschalter, über welchen der Akkumulator angeschlossen ist (an den Gleichspannungswandler), und eine weitere Verzweigung zum Gleichspannungsladeanschluss, wobei der Gleichspannungsladeanschluss über den Ladeanschlussschalter (schalterlos) mit dem Gleichspannungswandler verbunden ist. Eine schalterlose Verbindung schließt eine Verbindung mit einem Wandler nicht aus; etwaige Schaltelemente in einem Wandler sollen hierbei nicht als die hier genannten Schalter betrachtet werden.

Es ergibt sich ein Pfad ausgehend vom Gleichspannungswandler (bzw. dessen erste Seite) über den Ladeanschlussschalter zum Gleichspannungsladeanschluss und über den Direktverbindungsschalter zum Akkumulator. Ein weiterer Pfad führt vom Akkumulator über den Antriebsschalter zum Gleichspannungswandler bzw. dessen zweite Seite. Mit der zweiten Seite des Gleichspannungswandlers ist der elektrische Antrieb verbunden, sowie ggf. weitere Verbraucher oder Komponenten des Fahrzeugbordnetzes. Mittels des Antriebsschalters kann der Akkumulator galvanisch von der zweiten Seite des Gleichspannungswandlers getrennt werden, so dass über den Direktverbindungsschalter und den Ladeanschlussschalter der Akkumulator galvanisch nur mit dem Gleichspannungsladeanschluss verbunden ist. Weiterhin ist zwar die zweite Seite des Gleichspannungswandlers mit dem Ladeanschluss leistungsübertragend verbunden, jedoch findet durch diesen Pfad keine galvanische Verbindung statt. Aus diesem Grund trennt zum einen der Gleichspannungswandler und zum anderen der Antriebsschalter den Gleichspannungsladeanschluss von Filterkapazitäten, die galvanisch mit der zweiten Seite des Gleichspannungswandlers verbunden sind (etwa Cy-Kapazitäten am elektrischen Antrieb oder anderer Komponenten).

Des Weiteren lässt sich über den Gleichspannungswandler ausgehend vom Gleichspannungsladeanschluss Energie einspeisen, während die galvanisch nicht trennende Verbindung über den Direktverbindungsschalter und den Ladeanschlussschalter Energie von dem Gleichspannungsladeanschluss zum Akkumulator übertragen werden kann. In einer ersten Variante ist zwischen dem galvanisch trennenden Gleichspannungswandler und den Direktverbindungsschalter bzw. den Ladeanschlussschalter kein weiterer Schalter und insbesondere kein weiterer Gleichspannungswandler vorgesehen. In einer weiteren Variante ist vorgesehen, dass zwischen dem galvanisch isolierenden Gleichspannungswandler und den Gleichspannungsladeanschluss ein galvanisch nicht trennender Anschlusswandler (auch als Gleichspannungswandler ausgeführt) vorgesehen ist. Dieser befindet sich zwischen einem dem Gleichspannungsladeanschluss nachgeschalteten Schalter und dem galvanisch isolierenden Gleichspannungswandler (bzw. dem Direktverbindungsschalter).

Der Ladeanschlussschalter der Verbindungsschaltung kann mit derjenigen Seite des Direktverbindungsschalters verbunden sein, welche mit dem Gleichspannungswandler verbunden ist.

Es kann vorgesehen sein, dass eine Steuervorrichtung (des Fahrzeugbordnetzes) ansteuernd mit den Schaltern verbunden ist. In einem DC-Ladebetrieb (entsprechend einem Gleichspannungsladebetrieb) ist die Steuervorrichtung eingerichtet, den Ladeanschlussschalter in geschlossenen Zustand anzusteuern, der Direktverbindungsschalter in einem offenen Zustand anzusteuern und den Antriebsschalter in einem geschlossenen Zustand anzusteuern. Die Steuervorrichtung ist somit ausgebildet, den zweiten Schalter im geschlossenen Zustand anzusteuern und den ersten Schalter im offenen Zustand anzusteuern, wenn der DC-Ladebetrieb vorgesehen ist. In einem Fahrbetrieb ist die Steuervorrichtung eingerichtet, den Ladeanschlussschalter (entsprechend dem zweiten Schalter) und den Direktverbindungsschalter (entsprechend dem ersten Schalter) in einem offenen Zustand anzusteuern. In dem Fahrbetriebszustand wird der Antriebsschalter in einem geschlossenen Zustand angesteuert. Dies wird von der Steuervorrichtung vorgesehen. Die Steuervorrichtung ist eingerichtet, in einem Fahrbetrieb und in einem DC-Ladebetrieb betrieben zu werden.

In einer Variante ist der Ladeanschlussschalter der Verbindungsschaltung mit denjenigen Seite des Direktverbindungsschalters verbunden, welche mit dem Akkumulator verbunden ist. Dies entspricht der ersten Seite des galvanisch trennenden Gleichspannungswandlers. Die Verbindungsschaltung kann ferner einen galvanisch verbindenden Anschlusswandler aufweisen. Dieser ist als Gleichspannungswandler ausgebildet, wird jedoch zur klaren Trennung gegenüber dem galvanisch trennenden Gleichspannungswandler nur als Anschlusswandler bezeichnet. Lediglich seine Funktion entspricht der eines Gleichspannungswandlers. Der Gleichspannungsladeanschluss ist über den Anschlusswandler mit derjenigen Seite des Direktverbindungsschalters verbunden, welche mit dem Gleichspannungswandler verbunden ist. In dieser Variante besteht ein alternativer Ladeanschlussschalter, der zwischen dem Gleichspannungsladeanschluss und dem Akkumulator vorgesehen ist und somit mit der Seite des Direktverbindungsschalters verbunden ist, die den Gleichspannungswandler abgewandt ist. In vorhergehend dargestellten Varianten ist der Ladeanschlussschalter mit derjenigen Seite des Direktverbindungsschalters verbunden, welche den Gleichspannungswandler zugewandt ist. In der hier beschriebenen Variante besteht eine weitere Verbindung ausgehend von dem Gleichspannungsladeanschluss über einen Zusatzschalter (der auch als Trennschalter bezeichnet wird) zu dem Anschlusswandler. Der Anschlusswandler verbindet hierbei den Trennschalter mit den galvanisch trennenden Gleichspannungswandler bzw. mit dessen erster Seite. Insbesondere verbindet der Anschlusswandler den Trennschalter (der zum Gleichspannungsladeanschluss führt) mit dem Direktverbindungsschalter, welcher wiederum den Anschlusswandler mit dem Akkumulator verbindet. Über den Anschlusswandler kann dadurch eine Gleichspannung von dem Gleichspannungsladeanschluss an den Akkumulator übertragen werden, ohne dass sich hierbei galvanisch nicht isolierte Verbindungen zu den Cy-Kondensatoren des elektrischen Antriebs ergeben würden.

In einem weiteren Lademodus kann der Ladeanschlussschalter geschlossen sein, so dass der Gleichspannungsladeanschluss über den Ladeanschlussschalter direkt (d. h. nicht über den Anschlusswandler) mit dem Akkumulator verbunden ist, insbesondere nicht über den Direktverbindungsschalter. Beim Laden ist vorzugsweise der Antriebsschalter geöffnet, so dass durch den Antriebsschalter einerseits und durch den galvanisch trennenden Gleichspannungswandler sich eine galvanische Trennung zwischen den Cy-Kondensatoren des elektrischen Antriebs und den Gleichspannungsladeanschluss ergibt. Ferner ist es nicht notwendig, dass der Akkumulator zwischen verschiedenen Nennspannungen konfiguriert werden muss, sondern kann eine feste Nennspannung aufweisen und somit eine nicht änderbare Konfiguration haben. Es kann allgemein vom Gleichspannungsladeanschluss über den Direktverbindungsschalter (erster Schalter) der Akkumulator geladen werden (wobei der Antriebsschalter offen ist, um die Cy-Kondensatoren des elektrischen Antriebs nicht mit dem Gleichspannungsladeanschluss zu verbinden). Es kann ferner bei geöffnetem Direktverbindungsschalter über den galvanisch trennenden Gleichspannungswandler und den dann geschlossenen Antriebsschalter der Akkumulator geladen werden. Diese beiden Möglichkeiten erlauben eine Anpassung an sich mit dem Ladezustand des Akkumulators ändernde Betriebsspannung des Akkumulators. Gleichzeitig ist es, ohne den Akkumulator umkonfigurieren zu müssen, möglich, den Akkumulator insbesondere bei geringem Ladezustand über den galvanisch trennenden Gleichspannungswandler zu laden. Darüber hinaus ist es möglich, dass mittels der zweiten Seite des galvanisch isolierenden Gleichspannungswandlers weitere Komponenten betrieben werden; der Antriebsschalter ermöglicht hierbei eine galvanische Abtrennung der Cy-Kondensatoren von dem Gleichspanungsladeanschluss.

Die Steuerung kann hierbei für (mindestens) zwei verschiedene Lademodi ausgelegt sein, wobei ein erster Lademodus über den galvanisch trennenden Gleichspannungswandler führt, und der andere Modus über einen Schalter, der den Akkumulator direkt mit dem Gleichspannungsladeanschluss verbindet. Es kann zudem ein Wechselspannungs-Lademodus vorgesehen sein.

Vorzugsweise ist der Gleichspannungsladeanschluss über einen Trennschalter mit dem Anschlusswandler verbunden. Das Fahrzeugbordnetz ist eingerichtet, den Trennschalter nur in einem DC-Lademodus in geschlossenem Zustand vorzusehen. Bestehen mehrere DC-Lademodi, dann kann in einen der Lademodi der Trennschalter geschlossen sein, und in einem anderen DC-Lademodus geschlossen oder geöffnet sein.

Der galvanisch trennende Gleichspannungswandler ist eingerichtet, eine erste Hochvoltspannung in eine zweite Hochvoltspannung zu wandeln. Die an der zweiten Seite des galvanisch trennenden Gleichspannungswandlers anliegende Hochvoltspannung ist vorzugsweise höher als die andere Hochvoltspannung. Insbesondere kann der galvanisch trennende Gleichspannungswandler eingerichtet sein, eine Spannung von der ersten Seite ausgehend zur zweiten Seite hin hochzusetzen. Insbesondere kann der galvanisch trennende Gleichspannungswandler eingerichtet sein, eine Spannung von 400 Volt an der ersten Seite umzuwandeln in eine Spannung von 800 Volt an der zweiten Seite. Diese Spannungswerte sind rein beispielhaft und können insbesondere um mindestens 10 % oder 25 % von den genannten nummerischen Werten abweichen.

Es kann ferner ein ein- oder mehrphasiger Wechselspannungsladeanschluss vorgesehen sein. Der Wechselspannungsladeanschluss des Fahrzeugbordnetzes ist vorzugsweise über einen Leistungsfaktorkorrekturfilter des Fahrzeugbordnetzes mit der ersten Seite des galvanisch trennenden Gleichspannungswandlers verbunden. Der Wechselspannungsladeanschluss ist insbesondere über den Leistungsfaktorkorrekturfilter mit dem ersten Verbindungspunkt bzw. mit dem Direktverbindungsschalter verbunden. Der Wechselspannungsanschluss ist somit über den Leistungsfaktorkorrekturfilter den Direktverbindungsschalter, der dem Leistungsfaktorkorrekturfilter nachgeschaltet ist, mit dem Akkumulator verbunden. Ferner kann, falls ein Anschlusswandler vorgesehen ist, der Wechselspannungsladeanschluss über den Leistungsfaktorkorrekturfilter mit dem Anschlusswandler verbunden sein, welcher wiederum über den Trennschalter zum Gleichspannungsladeanschluss führt. Der ebenfalls vorgesehene Schalter zwischen dem Akkumulator und dem Gleichspannungsladeanschluss ist geöffnet, vorzugsweise genauso wie der genannte Trennschalter, wenn mittels Wechselspannung geladen wird.

Anstatt des Leistungsfaktorkorrekturfilters kann auch ein anderes gleichrichtendes Bauelement vorgesehen sein, beispielsweise ein Gleichrichter, der keine hochsitzstellende oder tiefsitzstellende Funktion aufweist.

Das Fahrzeugbordnetz kann ferner über eine Zwischenkreiskondensatorschaltung verfügen. Diese ist an der ersten Seite des galvanisch isolierenden Gleichspannungswandlers angeschlossen. Die Zwischenkreiskondensatorschaltung kann über mehrere Kondensatoren verfügen, die konfigurierbar sind. Mit anderen Worten kann die Zwischenkreiskondensatorschaltung konfigurierbar sein und über mehrere Kondensatoren verfügen, die auswählbar (mittels einer schaltbaren Konfigurationsschaltung) parallel oder seriell miteinander verbunden sind. Entsprechende Schalter verbinden hierbei die Kondensatoren parallel in einem ersten Konfigurationszustand und seriell in einen zweiten Konfigurationszustand.

An die zweite Seite des galvanisch trennenden Gleichspannungswandlers ist der elektrische Antrieb angeschlossen. Die zweite Seite des galvanisch isolierenden Gleichspannungswandlers kann hierbei einen Bordnetzzweig darstellen, an den der elektrische Antrieb angeschlossen ist, der jedoch auch einen Teil dieses Bordnetzzweigs bilden kann. Anstatt oder in Kombination mit dem elektrischen Antriebplan können eine oder mehrere weitere Komponenten an die zweite Seite des galvanisch isolierenden Gleichspannungswandlers verbunden sein. Die zweite Seite des galvanisch trennenden Gleichspannungswandlers ist hierbei mit mindestens einer weiteren Komponente verbunden. Die Komponenten können ausgebildet sein als elektrische Heizvorrichtung für den Innenraum als elektrische Heizvorrichtung für einen Wärmekreislauf (etwa an der Leistungselektronik und/oder des elektrischen Antriebs) oder für eine Abgasnachbehandlungsvorrichtung. Die weiteren Komponenten können ferner ausgebildet sein als elektrischer Klimakompressor, als induktive Ladeeinheit oder als Niedervoltgleichspannungswandler. An den Niedervolt-Gleichspannungswandler können sich weitere Komponenten anschließen, insbesondere kann sich an den Niedervolt-Gleichspannungswandler ein Niedervolt-Bordnetzzweig anschließen. Es kann eine weitere Komponente die wie vorangehend ausgebildet ist, sich an den galvanisch trennenden Gleichspannungswandler anschließen (insbesondere an dessen zweite Seite). Sind mehrere Komponenten an die zweite Seite des galvanisch trennenden Gleichspannungswandlers angeschlossen, können diese gleichartig und wie oben beschrieben ausgebildet sein, oder können verschiedenartig ausgebildet sein, wie vorangehend beschrieben ist.

Es kann ferner eine Entladevorrichtung mit der zweiten Seite des galvanisch trennenden Gleichspannungswandlers verbunden sein. Die Entladevorrichtung ist hierbei Teil des Fahrzeugbordnetzes. Die Entladevorrichtung entlädt insbesondere Zwischenkreiskondensatoren und/oder Cy-Kondensatoren (zwischen Masse und einem Versorgungspotential). Insbesondere kann die Entladeschaltung eingerichtet sein, eine Kapazität zwischen zwei Versorgungspotentialen zu entladen.

Zudem kann in einer Ausführungsform der Akkumulator in einem ersten Gehäuse angeordnet sein, der Antriebsschalter, der Direktverbindungsschalter und der Ladeanschlussschalter (ggf. auch der Trennschalter und der Anschlusswandler) in einem zweiten Gehäuse angeordnet sein und es kann der galvanisch trennende Gleichspannungswandler in einem dritten Gehäuse angeordnet sein.

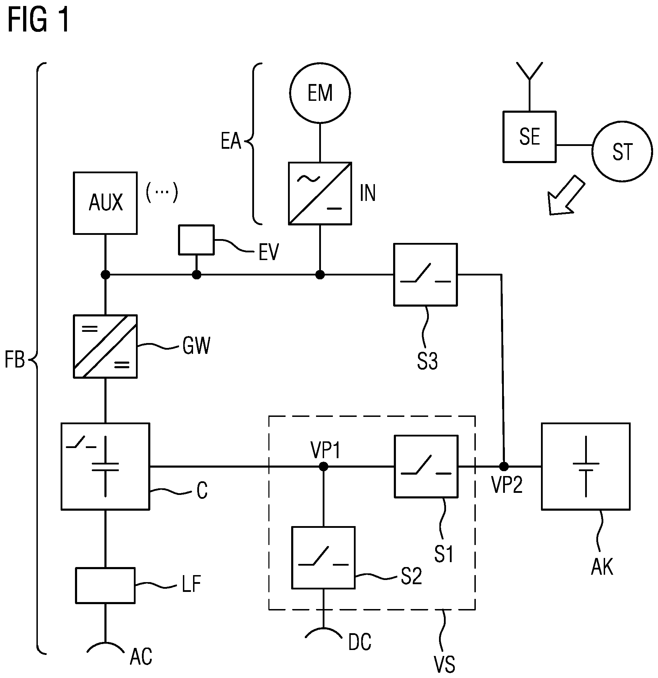

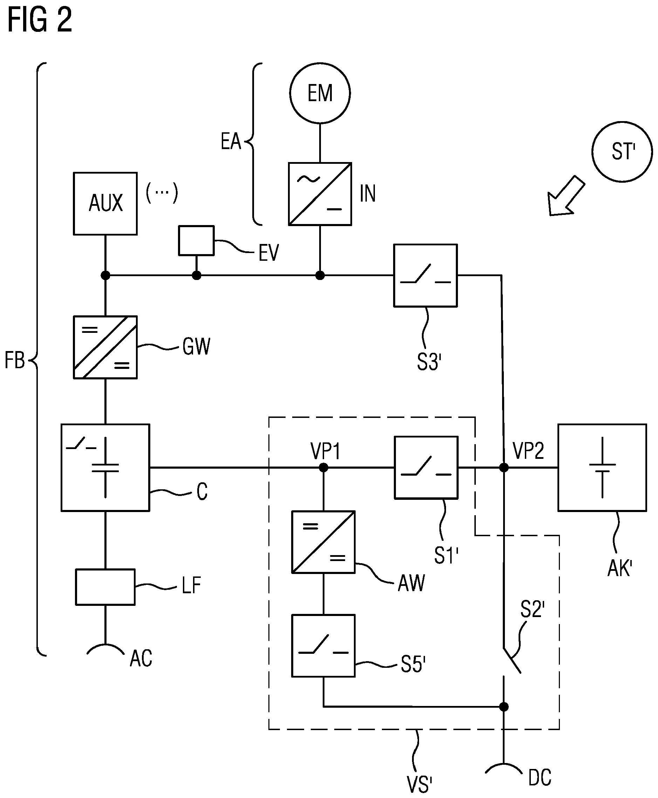

Die Figuren 1 und 2 zeigen beispielhaft mehrere Möglichkeiten der Realisierung eines hier beschriebenen Fahrzeugbordnetzes.

Die Figur 1 zeigt ein Fahrzeugbordnetz FB mit einem galvanisch trennenden Gleichspannungswandler GW. Ferner umfasst das Fahrzeugbordnetz FB einen Akkumulator AK. Der Akkumulator AK ist über den Direktverbindungsschalter S1 mit dem Gleichspannungswandler GW verbunden, insbesondere mit dessen erster Seite. Der Akkumulator ist ferner über den Antriebsschalter mit einer zweiten Seite des galvanisch isolierenden Gleichspannungswandlers GW verbunden. Mit der zweiten Seite des galvanisch trennenden Gleichspannungswandlers GW sind ferner weitere Komponenten (symbolhaft als AUX dargestellt) und ein elektrischer Antrieb EA verbunden. Der elektrische Antrieb EA umfasst eine elektrische Maschine EM, die über den Inverter mit der zweiten Seite des galvanisch isolierenden Gleichspannungswandlers GW verbunden ist. Die Schalter S1 und S2 treffen sich in einem ersten Verbindungspunkt VP. Ein zweiter Verbindungspunkt VP2 ist ein Punkt, an dem sich die Schalter S1 und S2 treffen. Somit ist der Schalter S1 zwischen dem ersten Verbindungspunkt VP1 und dem zweiten Verbindungspunkt VP2 angeschlossen.

Der Gleichspannungsladeanschluss DC ist über den Schalter S2 (und den ersten Verbindungspunkt VP1) mit der ersten Seite des Gleichspannungswandlers GW verbunden. Die Schalter S1 und S2 bilden zusammen die Verbindungsschaltung VS. Somit ist der galvanisch trennende Gleichspannungswandler GW über die schaltbare Verbindungsschaltung VS sowohl mit dem Gleichspannungsladeanschluss DC als auch mit dem Akkumulator AK verbunden.

Es kann eine Akkumulatorumschaltung bzw. Konfiguration vermieden werden, wobei der Gleichspannungswandler GW eine galvanische Trennung vorsieht, um so bei Isolationsfehlern einen Stromschlag zu vermeiden. Weiterhin ist vorgesehen, dass ein Wechselspannungsladeanschluss AC über einen Leistungsfaktorkorrekturfilter LF (beispielsweise als Vienna-Filter ausgebildet) an die erste Seite des galvanisch trennenden Gleichspannungswandlers GW angeschlossen ist, um so auch eine Wechselspannungslage zu ermöglichen. Konfigurierbare Zwischenkreiskondensatoren C sind an die erste Seite des Gleichspannungswandlers GW angeschlossen. Die Zwischenkreiskondensatoren C können parallel oder seriell miteinander verbunden werden, um so eine hohe Gesamtkapazität oder eine hohe Spannungsbelastbarkeit schaltbar einzustellen. Zunächst wird vorzugsweise der Schalter S1 geöffnet und Schalter S2 geschlossen. Dies wird durchgeführt, wenn geladen werden soll bzw. sich eine Steuerung C sich in einem Lademodus (insbesondere Gleichspannungslademodus befindet). Die Steuerung ST ist ansteuernd mit den in Figur 1 dargestellten Schaltern S1 bis S3 verbunden, insbesondere auch mit Schaltern der Zwischenkreiskondensatorschaltung C.

Die Steuerung ST kann zur Vorbereitung des Lademodus den Schalter S1 öffnen und den Schalter S2 schließen. Dann kann die Zwischenkreiskondensatorschaltung in einen Parallel-Zustand versetzt werden (von der Steuerung ST), wobei hierbei Zwischenkreiskondensatoren miteinander parallel verbunden sind. Es ist vorgesehen, dass dann der Gleichspannungswandler die an der ersten Seite anliegende Spannung wandelt und über den dann zu schließenden Schalter S3 an den Akkumulator überträgt. Es ist daher vorgesehen, dass nach der Parallelkonfiguration der Zwischenkreiskondensatorschaltung C der Schalter S3 geschlossen wird.

Gemäß einer Variante umfasst das Fahrzeugbordnetz einen Sender SE, der mit einer (externen) Gleichspannungsladestation kommunizieren kann, und eingerichtet ist, beim Laden die Spannung der Ladestation auf eine unveränderliche Spannung zu setzen, beispielsweise auf im Wesentlichen 400 Volt. Die Anpassung der Ladespannung übernimmt der galvanisch trennende Gleichspannungswandler GW.

Eine Entladevorrichtung EV an der zweiten Seite des galvanisch trennenden Gleichspannungswandlers dient zur Entladung und kann insbesondere nach Anschluss des Ladevorgangs aktiviert werden.

Die Figur 2 zeigt ein weiteres Fahrzeugbordnetz mit Komponenten, die den Komponenten der Figur 1 entsprechen, und die sich nur durch ein Hoch, im Bezugszeichen unterscheiden. Dies gilt insbesondere für alle Bezugszeichen der Figur 2, abgesehen von S2' und VS`.

Die Figur 2 zeigt ein Fahrzeugbordnetz FB mit einem Gleichspannungsladeanschluss DC, der über einen Ladeanschluss (im Gegensatz zur Figur 1) direkt mit dem Akkumulator bzw. dem zweiten Verbindungspunkt VP2 verbunden ist. Im Vergleich zur Figur 1 fällt auf, dass dort der Schalter S2 direkt mit dem Verbindungspunkt VP1 verbunden ist und somit indirekt über den Schalter S1 mit dem Akkumulator AK, während in der Figur 2 der Schalter S2' den Gleichspannungsladeanschluss DC mit dem zweiten Verbindungspunkt VP2 und somit direkt mit dem Akkumulator AK` verbindet. Hierin besteht ein Unterschied zur Variante der Figur 1.

Das Fahrzeugbordnetz FB der Figur 2 umfasst somit auch eine schaltbare Verbindungsschaltung VS`, die den Ladeanschlussschalter S2`, den Direktverbindungsschalter S1' und den ersten Verbindungspunkt VP1 umfasst. Mit dem ersten Verbindungspunkt ist ein Anschlusswandler AW verbunden, der wiederum über einen Trennschalter S5' mit dem Gleichspannungsanschluss DC (ohne einen weiteren Schalter) verbunden ist. Der Anschlusswandler AW ist galvanisch nicht isolierend und hat die Funktion eines Gleichspannungswandlers. Der Gleichspannungsladeanschluss DC ist über den Schalter S2' direkt mit dem Akkumulator AK` verbunden. Der Gleichspannungsladeanschluss DC ist über den Schalter S5' und den dem Schalter nachgeschalteten Anschlusswandler AW mit der zweiten Seite des Gleichspannungswandlers GW verbunden. Zwischen dem Anschlusswandler AW und dem Akkumulator befindet sich der Direktverbindungsschalter S1`.

Ansonsten weist das Fahrzeugbordnetz der Figur 2 ebenso einen elektrischen Antrieb EA sowie weitere Komponenten AUX auf, die an die zweite Seite des Gleichspannungswandlers GW angeschlossen sind und dadurch galvanisch getrennt sind von dem Akkumulator, sofern der Schalter S3' geöffnet ist. Der Schalter S3' verbindet hierbei die zweite Seite des galvanisch isolierenden Gleichspannungswandlers GW mit dem Akkumulator AK` bzw. mit dem zweiten Verbindungspunkt VP2. Auch hier umfasst der elektrische Antrieb eine elektrische Maschine EM, die über einen Inverter IN mit der zweiten Seite des galvanisch isolierenden Gleichspannungswandlers GW verbunden ist. Die zweite Seite des Gleichspannungswandlers GW ist somit über den Schalter S3' mit dem Akkumulator verbunden, während die Verbindung zwischen dem Akkumulator und der ersten Seite des Gleichspannungswandlers GW über den Direktverbindungsschalter S1' trennbar ist. Auch der Schalter S2' dient hier zur Abtrennung, insbesondere zur Abtrennung des Gleichspannungsladeanschlusses DC von dem Akkumulator. Es ergibt sich jedoch eine weitere Verbindung über den Schalter S5`, ausgehend von dem Gleichspannungsladeanschluss DC, über den Anschlusswandler AW zur ersten Seite des Gleichspannungswandlers GW. Die erste Seite des Gleichspannungswandlers ist mit einer konfigurierbaren Zwischenkreiskondensatorschaltung C verbunden. Hier befinden sich, wie in der Figur 1, Zwischenkreiskondensatoren, die ausführbar parallel oder seriell miteinander verbindbar sind.

Ein wechselbarer Spannungsladeanschluss AC ist über einen Leistungsfaktorkorrekturfilter LF mit der ersten Seite des Gleichspannungswandlers GW verbunden.

An der Steuerung ST dient zur Ansteuerung der in Figur 2 dargestellten Schalter sowie zur Konfiguration der Zwischenkreiskondensatorschaltung C.

Zum Gleichspannungsladen, insbesondere mit 400 Volt, wird der Schalter S5' geschlossen, wobei der Anschlusswandler AW diese Spannung hochsetzt. Der Anschlusswandler AW ist hierbei als Hochsetzsteller ausgebildet, der ausgehend vom Gleichspannungsladeanschluss DC zum galvanisch trennenden Gleichspannungswandler GW hin hochsetzstellt. Der Schalter S2` ist geöffnet. Der Schalter S1' ist geschlossen. Während dieses Ladezustands ist die Zwischenkreiskondensatorschaltung im seriellen Modus, d. h. die dort befindlichen Kondensatoren sind seriell miteinander verbunden. Dadurch kann die Zwischenkreiskondensatorschaltung eine höhere Betriebsspannung verarbeiten, als bei einer parallelen Konfiguration. Der Schalter S3 ist vorzugsweise geöffnet. Dadurch kann von dem Gleichspannungsladeanschluss DC über den Schalter S5`, den Anschlusswandler AW und den Schalter S1 ` Energie in den Akkumulator AK` eingebracht werden. Gleichzeitig gewährleistet der geöffnete Schalter S3' eine galvanische Abtrennung der CY-Kondensatoren von dem Akkumulator AK bzw. insbesondere von dem Gleichspannungsladeanschluss DC. Der galvanisch trennende Gleichspannungswandler GW dient hierbei zur Versorgung der Komponenten AUX und kann somit mit einer geringeren Leistung ausgestaltet sein als der Anschlusswandler.

Zum Fahren kann gemäß den Varianten der Figur 1 und der Figur 2 der Schalter S3 bzw. S3` geschlossen sein, so dass der Akkumulator AK, AK` den elektrischen Antrieb EA versorgen kann.

Während bei der Figur 1 die Ladeenergie über den Gleichspannungswandler GW geführt wird, ist in dem Beispiel der Figur 2 vorgesehen, dass der Anschlusswandler AW die Energie von dem Gleichspannungsladeanschluss DC an den Akkumulator AK` liefert; über den Gleichspannungswandler GW übertragene Leistung wird aufgrund des geöffneten Schalters S3' in der Figur 2 nicht an den Akkumulator weitergegeben.

## Patentansprüche

1. Fahrzeugbordnetz (FB) mit einem Gleichspannungsladeanschluss (DC), einem nicht konfigurierbaren Akkumulator (AK), einem galvanisch trennenden Gleichspannungswandler (GW), und einem elektrischen Antrieb (EA), wobei der Akkumulator (AK) über eine schaltbare Verbindungsschaltung (VS, VS`), an die der Gleichspannungsladeanschluss (DC) angeschlossen ist, mit einer ersten Seite des galvanisch trennenden Gleichspannungswandlers (GW) verbunden ist und der Akkumulator (AK) über einen Antriebschalter (S3) mit dem elektrischen Antrieb (EA) und einer zweiten Seite des Gleichspannungswandlers (GW) verbunden ist, wobei der galvanisch trennende Gleichspannungswandler (GW) eingerichtet ist, eine erste Hochvoltspannung in eine zweite Hochvoltspannung zu wandeln und wobei die Verbindungsschaltung (VS, VS') einen Direktverbindungsschalter (S1, S1') aufweist, der den Akkumulator (AK) mit der ersten Seite des galvanisch trennenden Gleichspannungswandlers schaltbar verbindet und der Gleichspannungsladeanschluss (DC) über einen Ladeanschlussschalter (S2, S2') der Verbindungsschaltung (VS, VS') mit dem Direktverbindungsschalter (S1, S1') verbunden ist.

2. Fahrzeugbordnetz (FB) nach Anspruch 1, wobei der Ladeanschlussschalter (S2) der Verbindungsschaltung (VS) derjenigen Seite des Direktverbindungsschalters (S1) verbunden ist, welche mit dem Gleichspannungswandler (GW) verbunden ist.

3. Fahrzeugbordnetz (FB) nach Anspruch 2, das ferner eine Steuervorrichtung (C) aufweist, die ansteuernd mit den Schaltern (S1, S2, S3) verbunden ist, die in einem DC-Ladebetrieb eingerichtet ist, den Ladeanschlussschalter (S2) in geschlossenem Zustand anzusteuern, den Direktverbindungsschalter (S1) in einem offenem Zustand anzusteuern und den Antriebschalter (S3) in einem geschlossenen Zustand anzusteuern, und die
in einem Fahrbetrieb eingerichtet ist, den Ladeanschlussschalter (S2) und den Direktverbindungsschalter (S1) in einem offenen Zustand anzusteuern, und den Antriebschalter (S3) in einem geschlossenen Zustand anzusteuern.

4. Fahrzeugbordnetz (FB) nach Anspruch 1, wobei der Ladeanschlussschalter (S2') der Verbindungsschaltung (VS') derjenigen Seite des Direktverbindungsschalters (S1') verbunden ist, welche mit dem Akkumulator (AK) verbunden ist und die Verbindungsschaltung (VS') ferner einen galvanisch verbindenden Anschlusswandler (AW) aufweist, der als ein zweiter Gleichspannungswandler ausgebildet ist, und der Gleichspannungsladeanschluss (DC) über den Anschlusswandler (AW) mit derjenigen Seite des Direktverbindungsschalters (S1') verbunden ist, welche mit dem Gleichspannungswandler (GW) verbunden ist.

5. Fahrzeugbordnetz (FB) nach Anspruch 4, das ferner eine Steuervorrichtung (ST) aufweist, die ansteuernd mit den Schaltern (S1`, S2', S3') verbunden ist, die in einem DC-Ladebetrieb eingerichtet ist, den Ladeanschlussschalter (S2') in offenem Zustand anzusteuern, den Direktverbindungsschalter (S1) in einem geschlossenen Zustand anzusteuern und den Antriebschalter (S3) in einem offenen Zustand anzusteuern, und die in einem Fahrbetrieb eingerichtet ist, der Ladeanschlussschalter (S2') und den Direktverbindungsschalter (S1) in einem offenen Zustand anzusteuern, und den Antriebschalter (S3) in einem geschlossenen Zustand anzusteuern.

6. Fahrzeugbordnetz (FB) nach Anspruch 4 oder 5, wobei der Gleichspannungsladeanschluss (DC) über einen Trennschalter (S5') mit dem Anschlusswandler (AW) verbunden ist, wobei das Fahrzeugbordnetz eingerichtet ist, den Trennschalter (S5') nur in einem DC-Lademodus in geschlossenem Zustand vorzusehen.

7. Fahrzeugbordnetz (FB) nach einem der vorangehenden Ansprüche, wobei der galvanisch trennende Gleichspannungswandler (GW) eingerichtet ist, dass die an der zweiten Seite des galvanisch trennenden Gleichspannungswandlers (GW) anliegende Hochvoltspannung die höhere der beiden Hochvoltspannungen ist.

8. Fahrzeugbordnetz (FB) nach einem der vorangehenden Ansprüche, das ferner einen Wechselspannungsladeanschluss (AC) aufweist, der über einen Leistungsfaktorkorrekturfilter (LF) des Fahrzeugbordnetzes (FB) mit der ersten Seite des galvanisch trennenden Gleichspannungswandler verbunden ist.

9. Fahrzeugbordnetz (FB) nach einem der vorangehenden Ansprüche, das ferner eine Zwischenkreiskondensatorschaltung (C) aufweist, die über mehrere Kondensatoren verfügt, die auswählbar parallel oder seriell miteinander verbunden sind.

10. Fahrzeugbordnetz (FB) nach einem der vorangehenden Ansprüche, wobei mit der zweiten Seite des galvanisch trennenden Gleichspannungswandlers (GW) mindestens eine weitere Komponente (AUX) verbunden ist, wobei die Komponenten ausgebildet sind als:
elektrische Heizvorrichtung für den Innenraum, für einen Wärmekreislauf oder für eine Abgasnachbehandlungsvorrichtung,
elektrischer Klimakompressor,
induktive Ladeeinheit oder Niedervolt-Gleichspannungswandler mit angeschlossenem Niedervolt-Bordnetzzweig.

11. Fahrzeugbordnetz (FB) nach einem der vorangehenden Ansprüche, wobei eine Entladevorrichtung (EV) mit der zweiten Seite des galvanisch trennenden Gleichspannungswandlers (GW) verbunden ist.

12. Fahrzeugbordnetz (FB) nach einem der vorangehenden Ansprüche, wobei der Akkumulator (AK) in einem ersten Gehäuse angeordnet ist, der Antriebschalter (S3), der Direktverbindungsschalter (S1, S1`) und der Ladeanschlussschalter (S2, S2') in einem zweiten Gehäuse angeordnet sind und der galvanisch trennende Gleichspannungswandler (GW) in einem dritten Gehäuse angeordnet ist.

## Claims

1. Vehicle on-board electrical system (FB) having a DC voltage charging connection (DC), a non-configurable accumulator (AK), a galvanically isolating DC-DC voltage converter (GW) and an electrical drive (EA), wherein the accumulator (AK) is connected to a first side of the galvanically isolating DC-DC voltage converter (GW) via a switchable connection circuit (VS, VS') to which the DC voltage charging connection (DC) is connected, and the accumulator (AK) is connected to the electrical drive (EA) and a second side of the DC-DC voltage converter (GW) via a drive switch (S3), wherein the galvanically isolating DC-DC voltage converter (GW) is configured to convert a first high voltage to a second high voltage, and wherein the connection circuit (VS, VS') has a direct connection switch (S1, S1') that connects the accumulator (AK) to the first side of the galvanically isolating DC-DC voltage converter in a switchable manner and the DC voltage charging connection (DC) is connected to the direct connection switch (S1, S1') via a charging connection switch (S2, S2') of the connection circuit (VS, VS').

2. Vehicle on-board electrical system (FB) according to Claim 1, wherein the charging connection switch (S2) of the connection circuit (VS) is connected to that side of the direct connection switch (S1) that is connected to the DC-DC voltage converter (GW).

3. Vehicle on-board electrical system (FB) according to Claim 2, which also has a control device (C) that is connected to the switches (S1, S2, S3) in an actuating manner, is configured, in a DC charging mode, to actuate the charging connection switch (S2) in a closed state, to actuate the direct connection switch (S1) in an open state and to actuate the drive switch (S3) in a closed state, and is configured, in a driving mode, to actuate the charging connection switch (S2) and the direct connection switch (S1) in an open state and to actuate the drive switch (S3) in a closed state.

4. Vehicle on-board electrical system (FB) according to Claim 1, wherein the charging connection switch (S2') of the connection circuit (VS') is connected to that side of the direct connection switch (S1') that is connected to the accumulator (AK), and the connection circuit (VS') also has a galvanically connecting connection converter (AW) that is in the form of a second DC-DC voltage converter, and the DC voltage charging connection (DC) is connected via the connection converter (AW) to that side of the direct connection switch (S1') that is connected to the DC-DC voltage converter (GW).

5. Vehicle on-board electrical system (FB) according to Claim 4, which also has a control device (ST) that is connected to the switches (S1', S2', S3') in an actuating manner, is configured, in a DC charging mode, to actuate the charging connection switch (S2') in an open state, to actuate the direct connection switch (S1) in a closed state and to actuate the drive switch (S3) in an open state, and is configured, in a driving mode, to actuate the charging connection switch (S2') and the direct connection switch (S1) in an open state and to actuate the drive switch (S3) in a closed state.

6. Vehicle on-board electrical system (FB) according to Claim 4 or 5, wherein the DC voltage charging connection (DC) is connected to the connection converter (AW) via an isolating switch (S5'), wherein the vehicle on-board electrical system is configured to provide the isolating switch (S5') in a closed state only in a DC charging mode.

7. Vehicle on-board electrical system (FB) according to one of the preceding claims, wherein the galvanically isolating DC-DC voltage converter (GW) is configured such that the high voltage present on the second side of the galvanically isolating DC-DC voltage converter (GW) is the higher of the two high voltages.

8. Vehicle on-board electrical system (FB) according to one of the preceding claims, which also has an AC voltage charging connection (AC) that is connected to the first side of the galvanically isolating DC-DC voltage converter via a power factor correction filter (LF) of the vehicle on-board electrical system (FB).

9. Vehicle on-board electrical system (FB) according to one of the preceding claims, which also has a DC link capacitor circuit (C) that has a plurality of capacitors that are selectably connected with one another in parallel or in series.

10. Vehicle on-board electrical system (FB) according to one of the preceding claims, wherein at least one further component (AUX) is connected to the second side of the galvanically isolating DC-DC voltage converter (GW), wherein the components are in the form of:
an electrical heating device for the interior, for a thermal circuit or for an exhaust gas aftertreatment device,
an electrical air-conditioning compressor,
an inductive charging unit, or
a low-voltage DC-DC voltage converter with a connected low-voltage on-board electrical system branch.

11. Vehicle on-board electrical system (FB) according to one of the preceding claims, wherein a discharge device (EV) is connected to the second side of the galvanically isolating DC-DC voltage converter (GW).

12. Vehicle on-board electrical system (FB) according to one of the preceding claims, wherein the accumulator (AK) is arranged in a first housing, the drive switch (S3), the direct connection switch (S1, S1') and the charging connection switch (S2, S2') are arranged in a second housing and the galvanically isolating DC-DC voltage converter (GW) is arranged in a third housing.

## Revendications

1. Réseau de bord de véhicule (FB) comprenant une borne de charge de courant continu (DC), un accumulateur (AK) non configurable, un convertisseur CC/CC (GW) à séparation galvanique et un dispositif d'entraînement électrique (EA), dans lequel l'accumulateur (AK) est connecté par l'intermédiaire d'un circuit de liaison (VS, VS') commutable, auquel est connectée la borne de charge de courant continu (DC), à un premier côté du convertisseur CC/CC (GW) à séparation galvanique, et l'accumulateur (AK) est relié par l'intermédiaire d'un commutateur d'entraînement (S3) au dispositif d'entraînement électrique (EA) et à un deuxième côté du convertisseur CC/CC (GW), dans lequel le convertisseur CC/CC (GW) à séparation galvanique est conçu pour convertir une première tension à haut voltage en une deuxième tension à haut voltage, et dans lequel le circuit de liaison (VS, VS') présente un circuit de liaison directe (S1, S1') qui relie l'accumulateur (AK) au premier côté du convertisseur CC/CC à séparation galvanique de manière commutable, et la borne de charge de courant continu (DC) est reliée au commutateur de liaison directe (S1, S1') par l'intermédiaire d'un commutateur de connexion de charge (S2, S2') du circuit de liaison (VS, VS').

2. Réseau de bord de véhicule (FB) selon la revendication 1, dans lequel le commutateur de connexion de charge (S2) du circuit de liaison (VS) est relié au côté du commutateur de connexion directe (S1) qui est relié au convertisseur CC/CC (GW).

3. Réseau de bord de véhicule (FB) selon la revendication 2, qui présente en outre un dispositif de commande (C) qui est relié aux commutateurs (S1, S2, S3) pour le pilotage, qui est conçu dans un mode de charge CC pour piloter le commutateur de connexion de charge (S2) dans un état fermé, pour piloter le commutateur de liaison directe (S1) dans un état ouvert, et pour piloter le commutateur d'entraînement (S3) dans un état fermé, et qui est conçu dans un mode de conduite pour piloter le commutateur de connexion de charge (S2) et le commutateur de liaison directe (S1) dans un état ouvert, et pour piloter le commutateur d'entraînement (S3) dans un état fermé.

4. Réseau de bord de véhicule (FB) selon la revendication 1, dans lequel le commutateur de connexion de charge (S2') du circuit de liaison (VS') est relié au côté du commutateur de liaison directe (S1') qui est relié à l'accumulateur (AK), et le circuit de liaison (VS') présente en outre un convertisseur de borne (AW) à liaison galvanique qui est réalisé sous la forme d'un deuxième convertisseur CC/CC, et la borne de charge de courant continu (DC) est reliée par l'intermédiaire du convertisseur de connexion (AW) au côté du commutateur de liaison directe (S1') qui est relié au convertisseur CC/CC (GW).

5. Réseau de bord de véhicule (FB) selon la revendication 4, qui présente en outre un dispositif de commande (ST) qui est relié aux commutateurs (S1', S2', S3') pour le pilotage, qui est conçu dans un mode de charge CC pour piloter le commutateur de connexion de charge (S2') dans un état ouvert, pour piloter le commutateur de liaison directe (S1) dans un état fermé, et pour piloter le commutateur d'entraînement (S3) dans un état ouvert, et qui est conçu dans un mode de conduite pour piloter le commutateur de connexion de charge (S2') et le commutateur de liaison directe (S1) dans un état ouvert, et pour piloter le commutateur d'entraînement (S3) dans un état fermé.

6. Réseau de bord de véhicule (FB) selon la revendication 4 ou 5, dans lequel la borne de charge de courant continu (DC) est reliée par l'intermédiaire d'un sectionneur (S5') au convertisseur de connexion (AW), dans lequel le réseau de bord de véhicule est conçu pour prévoir le sectionneur (S5') uniquement dans un mode de charge CC à l'état fermé.

7. Réseau de bord de véhicule (FB) selon l'une quelconque des revendications précédentes, dans lequel le convertisseur CC/CC (GW) à séparation galvanique est conçu de sorte que la tension à haut voltage appliquée au deuxième côté du convertisseur CC/CC (GW) à séparation galvanique est la plus haute des deux tensions à haut voltage.

8. Réseau de bord de véhicule (FB) selon l'une quelconque des revendications précédentes, qui présente en outre une borne de charge de tension alternative (AC) qui est reliée par l'intermédiaire d'un filtre de correction de facteur de puissance (LF) du réseau de bord de véhicule (FB) au premier côté du convertisseur CC/CC à séparation galvanique.

9. Réseau de bord de véhicule (FB) selon l'une quelconque des revendications précédentes, qui présente en outre d'un circuit de condensateur intermédiaire (C) qui dispose de plusieurs condensateurs qui sont reliés les uns aux autres au choix en parallèle ou en série.

10. Réseau de bord de véhicule (FB) selon l'une quelconque des revendications précédentes, dans lequel au moins un composant supplémentaire (AUX) est relié au deuxième côté du convertisseur CC/CC (GW) à séparation galvanique, les composants étant réalisés en tant que :
dispositif de chauffage électrique pour l'intérieur, pour un circuit thermique ou pour un dispositif de post-traitement de gaz d'échappement,
compresseur de climatisation électrique,
unité de charge inductive, ou
convertisseur CC/CC basse tension avec une branche de réseau de bord basse tension connectée.

11. Réseau de bord de véhicule (FB) selon l'une quelconque des revendications précédentes, dans lequel un dispositif de décharge (EV) est relié au deuxième côté du convertisseur CC/CC (GW) à séparation galvanique.

12. Réseau de bord de véhicule (FB) selon l'une quelconque des revendications précédentes, dans lequel l'accumulateur (AK) est disposé dans un premier boîtier, le commutateur d'entraînement (S3), le commutateur de liaison directe (S1, S1') et le commutateur de connexion de charge (S2, S2') sont disposés dans un deuxième boîtier, et le convertisseur CC/CC (GW) à séparation galvanique est disposé dans un troisième boîtier.
